# EUROPEAN PATENT SPECIFICATION

(11) **EP 2 642 440 B1**
(45) Date of publication and mention of the grant of the patent: **09.11.2016**
(21) Application number: 13160273.2
(22) Date of filing: 21.03.2013
(51) Int. Cl.: G06Q 10/10, G06Q 10/02

(54) **Reservation management device and computer readable recording medium recording program for reservation management device**
Reservierungsverwaltungsvorrichtung und computerlesbares Aufzeichnungsmedium und Aufzeichnungsprogramm für die Reservierungsverwaltungsvorrichtung
Dispositif de gestion de réservation et support d'enregistrement lisible par ordinateur enregistrant un programme de dispositif de gestion de réservation

(30) Priority: 21.03.2012 JP 2012063222
(43) Date of publication of application: 25.09.2013
(73) Proprietor: Casio Computer Co., Ltd., Tokyo 151-8543 (JP)
(72) Inventor: Itakura, Katsuyuki, Hamura-shi, Tokyo 205-8555 (JP)
(74) Representative: Grünecker Patent- und Rechtsanwälte PartG mbB

(56) References cited:
- US-A1- 2002 194 379
- US-A1- 2004 034 564
- US-A1- 2008 133 281
- US-B1- 6 553 358

## Description

### BACKGROUND OF THE INVENTION

### 1. Field of the Invention

The present invention relates to a reservation management device and a computer readable recording medium recording a program for the reservation management device.

### 2. Description of Related Art

Patent document US 6 553 358 B1 describes a device which is capable of analyzing incoming emails and automatically taking an appropriate decision on how to process an email, based on a probabilistic approach. Possible actions to be taken upon an email include, in particular, in activity, performing a pre-determined action automatically, or suggesting an action to be confirmed by the user. Possible actions include, in particular making an arrangement in a time schedule of the user of the device receiving the email such as registering an appointment in the time schedule. The decision takes into account the contents of the received email including organization information and patterns of information in the header of the email.

Patent document US 2008/0133281 A1 describes a system performing rental vehicle reservations. The system is in particular suited for being used in a complicated environment, wherein customers ordering rental vehicles include, besides private users such as tourists or business travelers, also large organizations such as companies which need replacement vehicles. Generally, requests for vehicle reservations are made by fax, and the faxes are processed in a fax processing system including a plurality of components that are generally distributed over remote locations by means of a network such as the internet or wide area networks. The fax processing system transforms faxes into electronic documents, in particular images that are attached to emails. The data extraction system and the fax processing system is capable of extracting reservation data by means of respective procedures, such as optical character recognition (OCR). In accordance with some embodiments, it is also possible to handle reservation requests, which are received not by fax, but in electronic form, such as via email.

Conventionally, there is known a reservation acceptance method in which eating places such as restaurants and pubs accept reservations from customers via websites. For example, there is known a reservation acceptance method in which a store itself owns a reservation management server to provide a menu screen of the store and accepts input of reservation information from customers (For example, Japanese Patent Application Laid Open Publication No. 2003-108643).

A customer accesses the menu screen of the reservation management server via a user terminal such as a PC (Personal Computer) to input the reservation information such as contact information, planned date and time, and menu required for reservation. The reservation management server receives the customer's reservation information via the user terminal, and stores and manages the reservation information.

However, it is a great burden on a store to manage the reservation management server. Thus, there is known a reservation acceptance method in which a store accepts customer's reservations by using a reservation server which accepts reservations for a plurality of eating places (For example, Japanese Patent Application Laid Open Publication No. 2006-331133).

The reservation server provides a reservation application screen which can accept reservations for a plurality of stores. A customer accesses the reservation application screen of the reservation server via a user terminal to input reservation information relating to the store he or she wishes to make reservation. The reservation server receives the reservation information of the customer and sends the reservation information through e-mail to the e-mail address of the store the customer wishes to make reservation. Upon receiving the e-mail of the reservation information via the store terminal, a staff of the store visually confirms the reservation information and sends an e-mail including information that the reservation has been accepted back to the reservation server. Upon receiving the e-mail of reservation acceptance, the reservation server sends the information that the reservation of the user is fixed through an e-mail to the e-mail address of the customer.

However, in such reservation acceptance method using the conventional reservation server, the work burden on the staff is great since he/she needs to recognize the reservation information by visually confirming the e-mails, transcribe the reservation information onto a reservation list by hand and input the reservation information in the store terminal by hand in order to manage the reservation information which came in through e-mails on the store side when the store receives the e-mails including the reservation information.

Especially, when the store uses a plurality of reservation servers, there is a possibility that the reservation servers have different reservation information formats in their e-mails sent to the store. Thus, it is more cumbersome for the staff to recognize the reservation information in the e-mails and the work burden on the staff becomes greater.

### SUMMARY OF THE INVENTION

This is achieved by the features of the independent claims.

An object of the present invention is to manage reservation information included in an e-mail in a form corresponding to a source address easily.

According to the present invention, it is possible to manage reservation information included in an e-mail in a form corresponding to a source address easily.

### BRIEF DESCRIPTION OF THE DRAWINGS

The above and other objects, advantages and features of the present invention will become more fully understood from the detailed description given hereinafter and the appended drawings which are given by way of illustration only, and thus are not intended as a definition of the limits of the present invention, and wherein:
FIG. 1 is a block diagram showing a reservation management system of an embodiment of the present invention;
FIG. 2 is a block diagram showing a functional structure of a reservation management device;
FIG. 3 is a diagram showing a configuration of a setting information table;
FIG. 4 is a diagram showing a configuration of an e-mail database;
FIG. 5 is a diagram showing a configuration of a reservation database;
FIG. 6 is a flowchart showing tentative reservation registration processing;
FIG. 7 is a flowchart showing tentative reservation printing processing;
FIG. 8 is a flowchart showing final reservation registration processing.

### DETAILED DESCRIPTION OF THE PREFERRED EMBODIMENT

Hereinafter, an embodiment according to the present invention will be described in detail with reference to the appended drawings. The present invention is not limited to the illustrated examples.

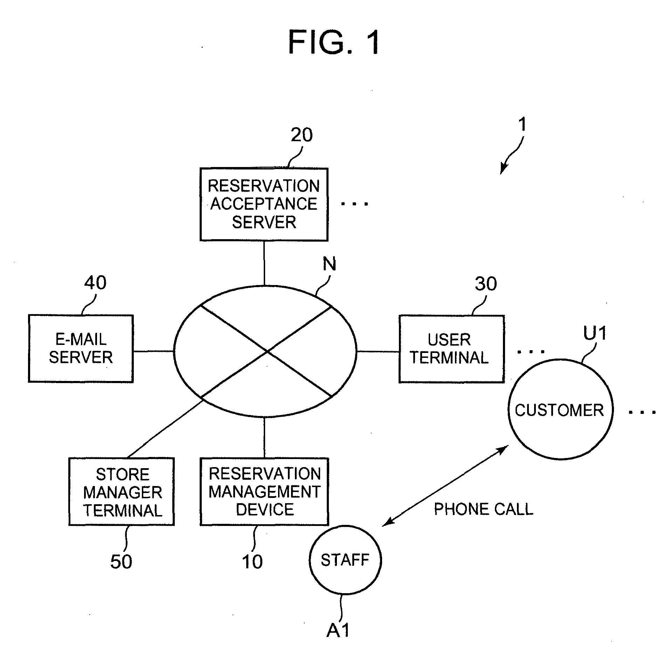

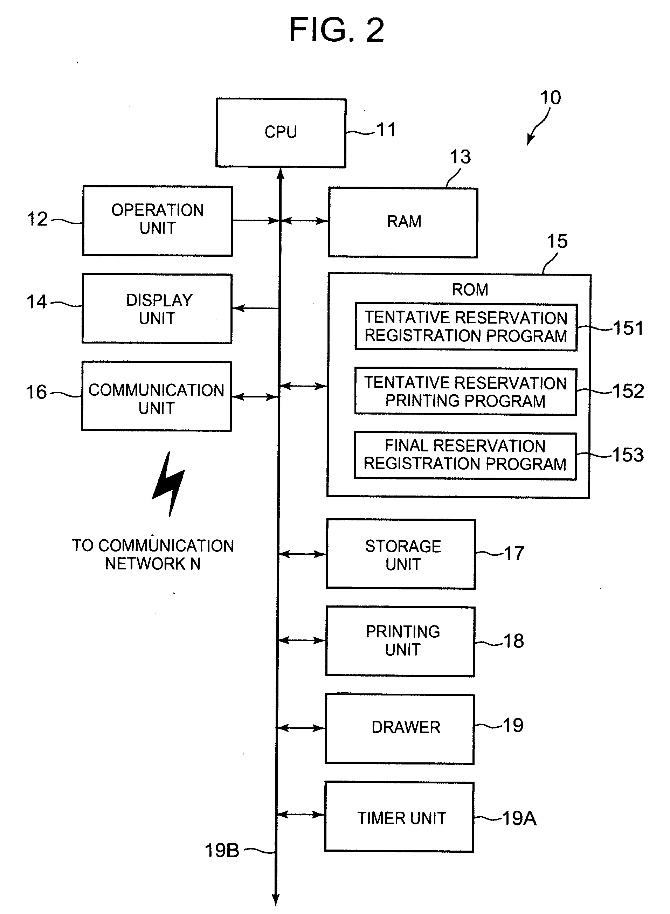

A device configuration of an embodiment according to the present invention will be described with reference to FIGS. 1 and 2. FIG. 1 is a block diagram showing a reservation management system 1 of the embodiment. FIG. 2 is a block diagram showing a functional structure of a reservation management device 10.

The reservation management system 1 of the embodiment will be described with reference to FIG. 1. The reservation management system 1 is a system wherein reservation information of a customer accepted by a reservation acceptance server 20 is e-mailed to the reservation management device 10 and the reservation management device 10 receives the e-mail, and recognizes and manages the reservation information.

The reservation management system 1 includes the reservation management device 10, the reservation acceptance server 20, a user terminal 30, an e-mail server 40 and a store manager terminal 50, for example. The devices in the reservation management system 1 are connected to each other via a communication network N.

The communication network N is a communication network such as the Internet and may include a network of a wireless communication in addition to a network of a wired communication.

The reservation management device 10 is a device which is installed in a store of an eating place such as a restaurant, a dining hall or a pub.

Among the staffs of the store having the reservation management device 10 installed therein, a staff in charge of the reservation management is referred to as a staff A1. There may be a plurality of staffs A1.

The reservation management device 10 has a function of assisting the staff A1 with final reservation registration by receiving e-mails including reservation information sent from the reservation acceptance server 20, recognizing and storing the reservation information in the e-mails.

The reservation management device 10 is described as having a function of registering sales data of customers at payment as an electronic register. However, the reservation management device 10 does not need to have the function as an electronic register.

In the reservation management system 1, though a plurality of stores use the reservation acceptance server 20 and the reservation management device is set in each of the stores, one reservation management device 10 will be described here as a representative.

The reservation acceptance server 20 is a server device owned by a reservation acceptance company which provides reservation acceptance services. The reservation acceptance services are services of accepting applications of tentative reservations for dining at stores to be used by customers in place of the stores.

The final reservation is performed by the staff A1 of each store after the tentative reservations. The reservations are fixed when the final reservation is completed.

The reservation acceptance server 20 provides the user terminal 30 with websites which introduce information on a plurality of stores and accept reservations. The website of each of the stores provides an introductory screen including operating hours, a map, menus and such like of the store and a reservation screen to accept reservation information input of a tentative reservation at each of the stores, for example.

The reservation information on a tentative reservation which is inputted on the reservation screen is information such as a planned time and date, desired seats, menus, the name of the customer who is making the reservation, the number of persons, a phone number of the customer, an e-mail address of the customer and a message to the store.

The reservation acceptance server 20 creates an e-mail including the reservation information which is inputted via the user terminal 30 and sends the e-mail to the e-mail address of the store to be reserved. The reservation information is included in the message of the e-mail, for example. The title of the e-mail is a character string which is identifiable for the reservation acceptance company where the reservation acceptance server 20 is installed, which is the source of the e-mail.

Further, a plurality of reservation acceptance services are provided by a plurality of reservation acceptance servers 20. Thus, a plurality of reservation acceptance servers 20 are provided in the reservation management system 1.

For some of the reservation acceptance servers 20, the reservation information is accepted through facsimile. The reservation acceptance server 2 0 receives a paper sheet image of the reservation information in a facsimile from a facsimile communication device of the customer.

Telephone lines for receiving facsimiles for a plurality of stores to accept reservations are connected to the reservation acceptance server 20. The telephone numbers of the telephone lines correspond one-to-one with the stores.

The sheet to be sent in a facsimile by the customer is the sheet in which a predetermined fill-in form is printed and the reservation information is filled in by the customer.

When receiving the reservation information in a facsimile from a customer via a telephone line, the reservation acceptance server 20 obtains image data of the sheet image which is received in a facsimile to create an e-mail with an attached file of the image data and sends the created e-mail to the e-mail address of the store corresponding to the telephone number which received the facsimile.

The user terminal 30 is an information processing terminal owned by a customer. Though the user terminal 30 is a PC here, the user terminal 30 is not limited to this. The user terminal 30 may be another terminal which can be connected to the communication network N such as a mobile phone, a PDA (Personal Digital Assistant), a smartphone and a tablet PC.

The reservation acceptance service is used by a plurality of customers. Thus, the reservation management system 1 is provided with a plurality of the user terminals 30 to be used by a plurality of customers. One of the plurality of the user terminals 30 and the user thereof will be described as a customer U1 as a representative.

The user terminal 30 includes a display unit and an operation unit. The user terminal 30 is connected to the reservation acceptance server 20 via the communication network N, receives web page information on the website and displays the web page information on the display unit.

Then, by the input from the customer U1 via the operation unit, the user terminal 30 requests and receives the reservation information input screen of the store to be reserved from the reservation acceptance server 20 and displays the reservation information input screen on the display unit.

The user terminal 30 accepts the input of the reservation information from the customer U1 via the operation unit and sends the reservation information to the reservation acceptance server 20 via the communication network N.

The e-mail server 40 is an e-mail server device for the reservation management device 10. The e-mail server 40 receives the e-mail for the e-mail address of the store having the reservation management device 10 from the source via the communication network N, stores the e-mail and forwards the stored e-mail in response to an inquiry from the reservation management device 10. In addition, the e-mail server 40 sends the e-mail sent from the reservation management device 10 to the e-mail address of the destination via the communication network N.

The store manager terminal 50 is an information processing terminal owned by the store manager of the store having the reservation management device 10.

The store manager terminal 50 is an information processing terminal which can be connected to the communication network N such as a PC, a mobile phone, a PDA, a smartphone and a tablet PC.

The store manager terminal 50 includes a function of sending and receiving e-mails and receives the reservation information of tentative reservation through an e-mail from the reservation management device 10 via an e-mail server (not shown in the drawings) on the communication network N.

Next, the inner configuration of the reservation management device 10 will be described with reference to FIG. 2.

As shown in FIG. 2, the reservation management device 10 includes a CPU (Central Processing Unit) 11, an operation unit 12, a RAM (Random Access Memory) 13, a display unit 14, a ROM (Read Only Memory) 15, a communication unit 16, a storage unit 17, a printing unit 18, a drawer 19 and a timer unit 19A. The units of the reservation management device 10 are connected to each other via a bus 19B.

The CPU 11 controls each of the units of the reservation management device 10. The CPU 11 reads out a specified program among various types of programs from the ROM 15, expands the program into the RAM 13 and carries out various types of processing in cooperation with the expanded program.

In accordance with a tentative reservation registration program 151, the CPU 11 recognizes the reservation information of the e-mail sent from the reservation acceptance server 20 in a procedure corresponding to the source address by using a setting information table 60 stored in the storage unit 17, and stores and registers the reservation information as the reservation information of a tentative reservation.

In accordance with a tentative reservation printing program 152, the CPU 11 prints the reservation information of the tentative reservation which is not printed yet in a reservation database 80 stored in the storage unit 17.

In accordance with a final reservation registration program 153, the CPU 11 displays the reservation information which is processed for both tentative and final reservations, registers the final reservation and cancels reservations by using the reservation database 80 stored in the storage unit 17.

In addition, the CPU 11 executes payment transaction at the customer's payment depending on a payment transaction processing (not shown in the drawings) stored in the ROM 15.

In the payment transaction, inputs of the items in the menu and the number of each item the customer ordered by the staff via the operation unit 12 are accepted, the billing amount is calculated and displayed on the display unit 14, input of the amount of money the customer gave the staff by the staff A1 via the operation unit 12 is accepted, the change is calculated, a receipt including the information on ordered items in the menu, the number of each item and the payment amount is printed by the printing unit 18 and a drawer part of the drawer 19 is released.

The operation unit 12 is a touch panel formed on the screen of the display unit 14 and outputs operation information in accordance with the touch inputs by a user to the CPU 11. The operation unit 12 can accept key touch inputs of characters such as alphanumeric characters, various functions and the like. The operation unit 12 may include a plurality of keys to accept key inputs of characters such as alphanumeric characters, various functions and the like.

The RAM 13 is a volatile semiconductor memory and includes a work area to store various data and programs.

The display unit 14 includes a display panel such as a LCD (Liquid Crystal Display) and an EL (Electro Luminescent) display and performs various types of display on the display panel in accordance with the display information inputted from the CPU 11.

The ROM 15 is a read-only semiconductor memory which stores various data and programs. In the ROM 15, the tentative reservation registration program 151, the tentative reservation printing program 152 and the final reservation registration program 153 are stored.

The communication unit 16 is a communication unit such as a network card for establishing communication connection to the communication network N.

The CPU 11 can communicate with the devices connected to the communication network N via the communication unit 16.

The storage unit 17 is a non-volatile memory such as a flash memory storing information so as to be readable and writable, an EEPROM (Electrically Erasable Programmable ROM) and a RAM backed up with a battery.

The storage unit 17 stores an after-mentioned setting information table 60, an e-mail database 70 and a reservation database 80.

The printing unit 18 is a printing unit such as a thermal printer which prints information on paper sheets.

The printing unit 18 prints information for a receipt on a receipt sheet in accordance with an instruction of the CPU 11.

Also, the printing unit 18 can print reservation information of a tentative reservation on a sheet in accordance with an instruction of the CPU 11.

The drawer 19 includes a drawer part containing money and coupons and a release mechanism, and releases the drawer part by the release mechanism in accordance with an instruction of the CPU 11. The drawer part which was released by the drawer 19 is closed manually by the staff.

The timer unit 19A includes a timer circuit and outputs information on the current time and date timed by the timer circuit.

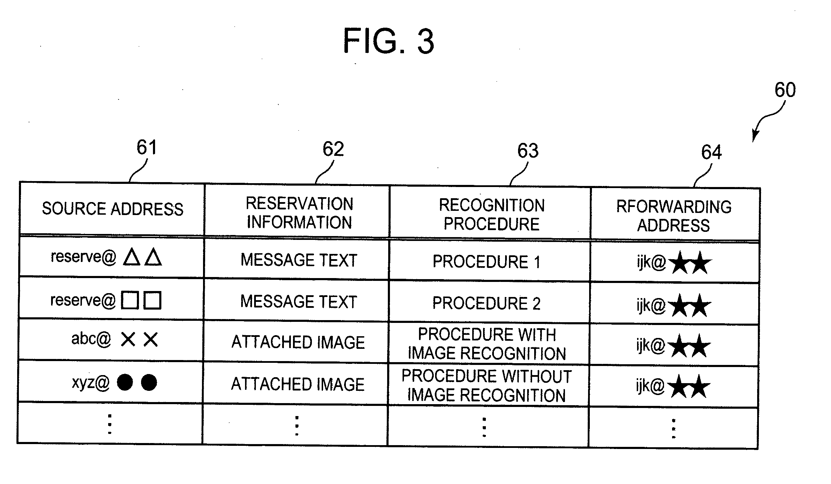

Next, information stored in the storage unit 17 of the reservation management device 10 will be described with reference to FIGS.3 to 5.

FIG. 3 is a diagram showing a configuration of the setting information table 60.

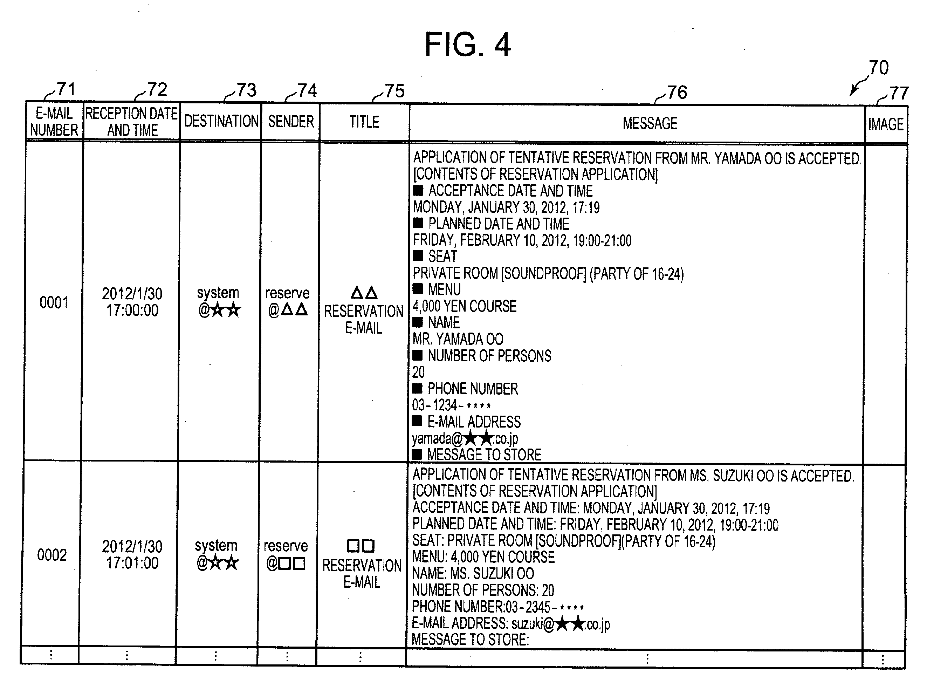

FIG. 4 is a diagram showing a configuration of the e-mail database 70.

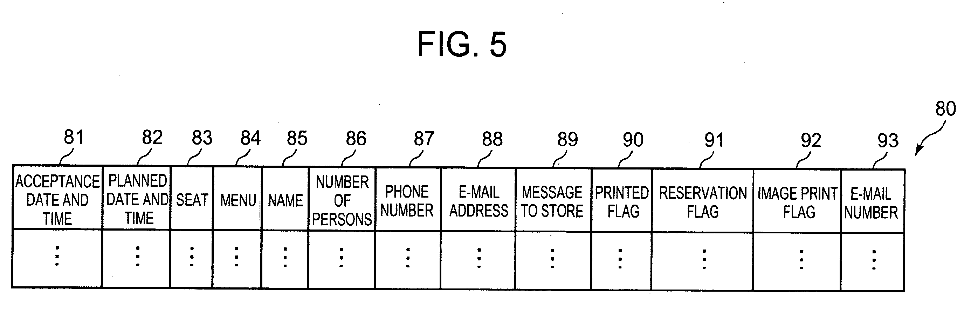

FIG. 5 is a diagram showing a configuration of the reservation database 80.

The setting information table 60 shown in FIG. 3 is a table of setting information regarding a tentative reservation and the table is stored in the storage unit 17. The reservation acceptance servers 20 have different e-mail addresses which are different from each other.

The setting information table 60 includes a source address 61, reservation information 62, a recognition procedure 63 and a forwarding address 64.

The source address 61 is a source address of an e-mail sent from each of the reservation acceptance servers 20.

The reservation information 62 indicates whether the reservation information in the e-mail of the source address 61 is in the message text or in the attached image.

The recognition procedure 63 is information to identify a procedure of recognizing and obtaining the reservation information in the e-mail of the source address 61.

Though a case wherein the recognition procedure 63 includes four kinds of procedures which are Procedure 1, Procedure 2, a procedure with image recognition and a procedure without image recognition is described as an example here, the recognition procedure 63 is not limited to this.

Procedure 1 indicates a procedure of extracting the reservation information from each item of the reservation information data which is from the line next of "■" to the line before the next "■" in the message text of the e-mail.

Procedure 2 indicates a procedure of extracting the reservation information from each item of the reservation information data which is from a character following " : " to the last character in the same line inside the message text of the e-mail.

The procedure with image recognition indicates a procedure of recognizing the reservation information by performing OCR (Optical Character Recognition) processing on attached image data of the e-mail. The procedure without image recognition indicates a procedure of handling the attached image data of the e-mail without change as the reservation information.

The forwarding address 64 is an e-mail address to forward the e-mail from the source address 61.

Though the forwarding address 64 is set to the e-mail address of the store manager terminal 50 here, the forwarding address 64 is not limited to this.

The e-mail database 70 shown in FIG. 4 is a database which is stored in the storage unit 17 and contains data of e-mails sent to the e-mail addresses of the stores having the reservation management devices 10 from the reservation acceptance server 20.

The reservation management device 10 can accept e-mails to an e-mail address for business communication in addition to the e-mail addresses for store reservation.

The e-mail database 70 includes an e-mail number 71, a reception date and time 72, a destination 73, a sender 74, a title 75, a message 76 and an image 77.

The e-mail number 71 is an identification number of an e-mail for each of the records in the e-mail database 70. In the e-mail database 70, information of one e-mail is stored in one record. The reception date and time 72 is a reception date and time of an e-mail of the e-mail number 71.

The destination 73 is a destination of an e-mail of the e-mail number 71. The destination 73 includes at least an e-mail address of the store having the reservation management device 10 used for reservation.

The sender 74 is a source address of an e-mail of the e-mail number 71.

The title 75 is the title of the e-mail of the e-mail number 71.

The message 76 is a message text of the e-mail of each e-mail number 71.

The image 77 is image data which is a text converted version of the attached image in the e-mail of each e-mail number 71.

The reservation database 80 shown in FIG. 5 is stored in the storage unit 17 and is a database of reservation information for each of the e-mails (each of the reservations) sent to the e-mail addresses of the stores having the reservation management devices 10 from the reservation acceptance server 20.

The reservation database 80 includes an acceptance date and time 81, a planned date and time 82, a seat 83, a menu 84, a name 85, a number of persons 86, a phone number 87, an e-mail address 88, a message to store 89, a printed flag 90, a reservation flag 91, an image print flag 92 and an e-mail number 93.

The acceptance date and time 81 is a date and time of accepting the reservation by an e-mail and is the same as the date and time of receiving the e-mail here. The planned date and time 82 is a planned date and time of the customer indicated in the reservation of the acceptance date and time 81.

The seat 83 is seat information (a condition of desired seat) of the customer indicated in the reservation of the acceptance date and time 81. The menu 84 is the menu desired by the customer indicated in the reservation of the acceptance date and time 81.

The name 85 is a name of the customer indicated in the reservation of the acceptance date and time 81. The number of persons 86 is the number of persons indicated in the reservation of the acceptance date and time 81. The phone number 87 is the phone number of the customer indicated in the reservation of the acceptance date and time 81.

The message to store 89 is a message such as a request to the store indicated in the reservation of the acceptance date and time 81.

The printed flag 90 is a flag indicating whether the reservation information of tentative reservation of each acceptance date and time 81 is printed. The printed flag 90 is 1 if the reservation information is printed and 0 if the reservation information is not printed. The reservation flag 91 is a flag indicating the kind of the reservation of the acceptance date and time 81. The reservation flag 91 is 0 for a tentative reservation, 1 for a final reservation and 2 for a cancellation of the reservation.

The image print flag 92 is a flag indicating whether to perform image printing of the reservation information of tentative reservation for the acceptance date and time 81. The image print flag 92 is 1 if the image printing is to be performed and 0 if the image printing is not to be performed.

The image printing is performed when the recognition procedure of the attached image in the e-mail is the procedure without image recognition. The e-mail number 93 is an identification number of the e-mail subject to image printing indicated in the image print flag 92.

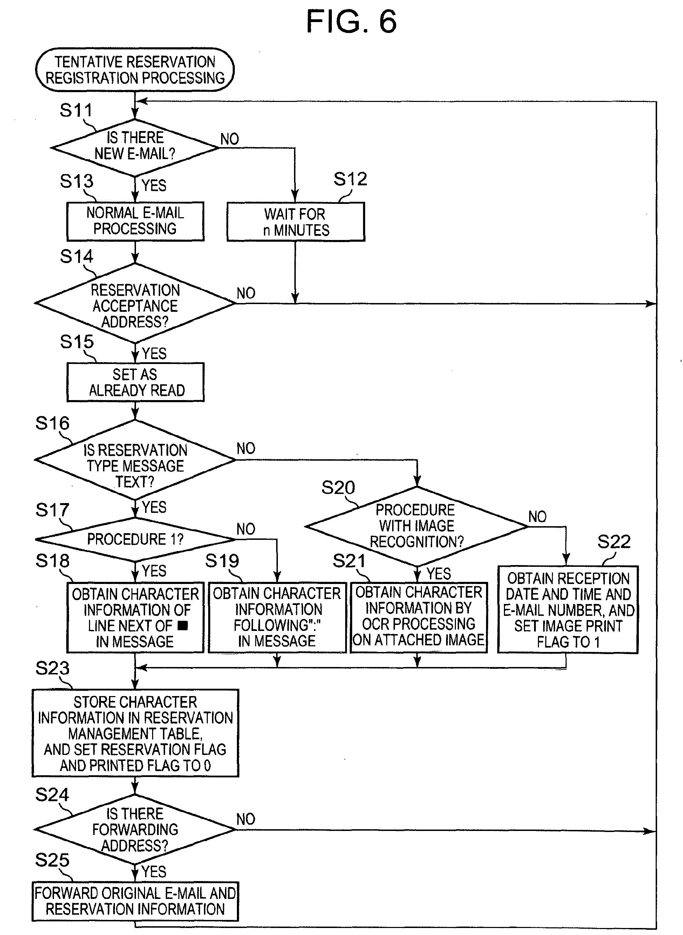

Next, operations of the reservation management device 10 in the reservation management system 1 will be described with reference to FIGS. 6 to 8.

FIG. 6 is a flowchart showing tentative reservation registration processing.

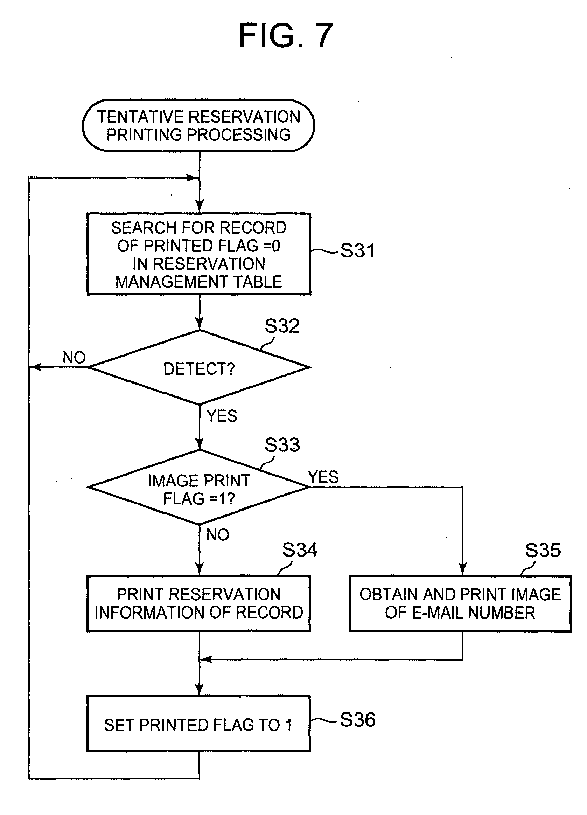

FIG. 7 is a flowchart showing tentative reservation printing processing.

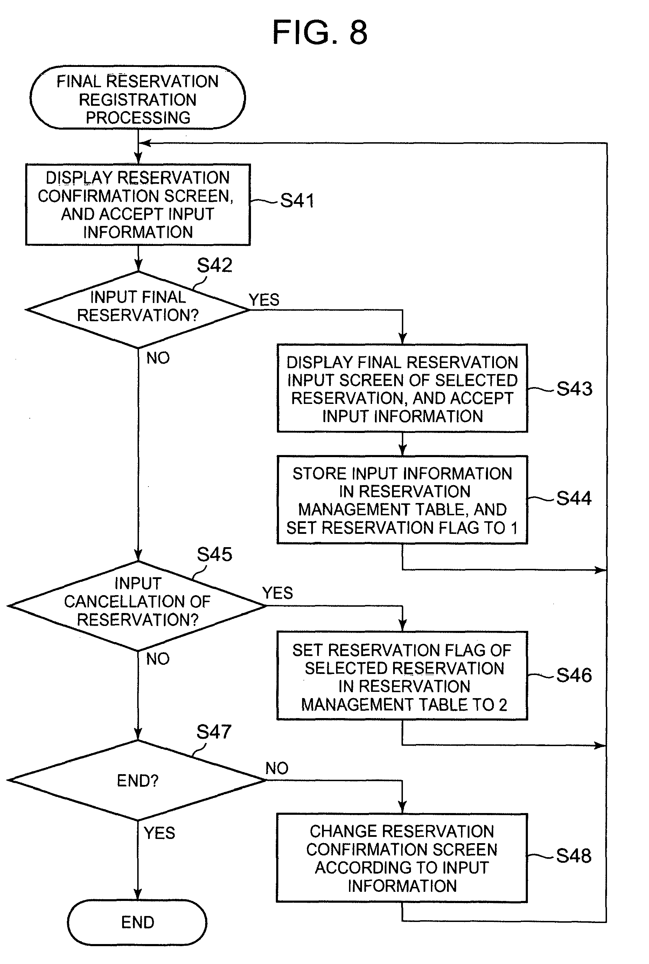

FIG. 8 is a flowchart showing final reservation registration processing.

First, tentative reservation registration processing executed in the reservation management device 10 will be described with reference to FIG. 6.

The tentative reservation registration processing is processing of recognizing the reservation information in the e-mail sent from the reservation acceptance server 20 in a procedure corresponding to the source address and storing and registering the reservation information as reservation information of a tentative reservation.

In the reservation management device 10, when the power is turned on, for example, the CPU 11 is triggered to execute the tentative reservation registration processing in cooperation with the tentative reservation registration program 151 which is read out from the ROM 15 and expanded in the RAM 13 appropriately.

First, the CPU 11 queries the e-mail server 40 via the communication unit 16 and the communication network N to determine whether there is a new e-mail for the e-mail address of a store having the reservation management device 10 (step S11).

If there is no new e-mail (step S11; NO), the CPU 11 uses timer information in the timer unit 19A to wait for n (n: arbitrary integer) minutes (step S12), and shifts to step S11.

If there is a new e-mail (step S11; YES), the CPU 11 receives the new e-mail from the e-mail sever 40 via the communication network N and the communication unit 16 and performs normal e-mail processing on the received e-mail (step S13).

In the normal e-mail processing in step S13, attached image data is converted into a text if there is attached image data, and the reception date and time, the destination, the sender, the title, text data of the message and the text data of the attached image data of a new e-mail are added to a reception date and time 72, a destination 73, a sender 74, a title 75, a message 76 and an image 77 for the record of a new e-mail number 71 in the e-mail database 70 in the storage unit 17, respectively.

The e-mail for each of the records in the e-mail database 70 is readable by a mailer.

Then, the CPU 11 refers to the setting information table 60 stored in the storage unit 17 to determine whether the source address of the new e-mail received in step S11 is the source address 61 indicating the e-mail address for reservation acceptance (step S14).

If the source address is not the reservation acceptance address (step S14; NO), the CPU 11 shifts to step S11.

If the source address is the reservation acceptance address (step S14; YES), the CPU 11 sets the new e-mail received in step S11 as already read (step S15).

Then, the CPU 11 determines whether the reservation information 62 corresponding to the source address 61 of the e-mail received in step S11 is a message text (step S16).

If the reservation information 62 is a message text (step S16; YES), the CPU 11 determines whether the recognition procedure 63 corresponding to the reservation information 62 is Procedure 1 (step S17).

If the recognition procedure 63 is Procedure 1 (step S17; YES), the CPU 11 recognizes and obtains character information of each of the items of the reservation information which is from the line next of "■" to the line before the next "■" in the message 76 in the e-mail database 70 corresponding to the e-mail received in step S11 (step S18).

If the recognition procedure 63 is Procedure 2 (step S17; NO), the CPU 11 recognizes and obtains character information from a character following " : " to the last character in the same line in the message 76 corresponding to the e-mail received in step S11 (step S19).

If the reservation information 62 is not a message text (step S16; NO), the CPU 11 determines whether the recognition procedure 63 corresponding to the reservation information 62 is the procedure with image recognition (step S20).

If the recognition procedure 63 is the procedure with image recognition (step S20; YES), the CPU 11 reads out the image 77 in the e-mail database 70 corresponding to the e-mail received in step S11, converts the image 77 into an image of image data and performs OCR processing on the image to obtain character information of each of the items of the reservation information (step S21).

In step S21, for example, the items of the reservation information are obtained from the OCR-processed character information in the same procedure as Procedure 1 or 2.

If the recognition procedure 63 is the procedure without image recognition (step S20; NO), the CPU 11 reads out the reception date and time 72 and the e-mail number 71 in the e-mail database 70 corresponding to the e-mail received in step S11 and sets the image print flag 92 in the reservation database 80 to 1 (step S22).

Then, the CPU 11 stores the character information obtained in step S18, S19, S21 or S22 in corresponding items of the new record in the reservation database 80 and sets the reservation flag 91 and the printed flag 90 of the record to 0 (step S23).

In step S23, the acceptance date and time, the planned date and time, the seat, the menu, the name, the number of persons, the phone number, the e-mail address, the message to store obtained in step S18, S19 or S21 are stored in the acceptance date and time 81, the planned date and time 82, the seat 83, the menu 84, the name 85, the number of persons 86, the phone number 87, the e-mail address 88, the message to store 89, respectively.

The e-mail number 71 obtained in step S22 is stored in the e-mail number 93. The reception date and time 72 obtained in step S22 is stored in the acceptance date and time 81.

Then, the CPU 11 refers to the setting information table 60 to determine whether there is a forwarding address 64 corresponding to the source address 61 of the e-mail received in step S11 (step S24).

If there is no forwarding address 64 (step S24; NO), the CPU 11 shifts to step S11.

If there is a forwarding address 64 (step S24; YES), the CPU 11 forwards the e-mail received in step S11 and the reservation information of the corresponding new record in the reservation database 80 to the forwarding address obtained in step S24 via the communication unit 16 and the communication network N (step S25), and shifts to step S11.

Next, the tentative reservation printing processing executed in the reservation management device 10 will be described with reference to FIG. 7.

The tentative reservation printing processing is processing of printing the reservation information of a tentative reservation in the reservation database 80 which is not printed yet. In the reservation management device 10, when the power is turned on, for example, the CPU 11 is triggered to execute the tentative reservation printing processing in cooperation with the tentative reservation printing program 152 which is read out from the ROM 15 and expanded in the RAM 13 appropriately.

First, the CPU 11 refers to the reservation database 80 stored in the storage unit 17 to search for a record in which the printed flag 90 is 0 (step S31).

Then, the CPU 11 determines whether the record is detected in step S31 (step S32).

If no record is detected (step S32; NO), the CPU shifts to step S31.

If the record is detected (step S32; YES), the CPU 11 determines whether the image print flag 92 of the record detected in step S31 is 1 (step S33).

If the image print flag 92 is 0 (step S33; NO), the CPU 11 makes the printing unit 18 print the acceptance date and time 81 through the message to store 89 in the reservation information of the record detected in step S31 (step S34).

If the image print flag 92 is 1 (step S33; YES), the CPU 11 reads out the image 77 in the e-mail database 70 of the e-mail number 93 of the record detected in step S31, converts the image 77 to an image of image data and makes the printing unit 18 print the image together with the acceptance date and time 81 (step S35).

Then, the CPU 11 sets the printed flag of the record detected in step S31 to 1 (step S36), and shifts to step S31.

The staff A1 visually confirms the reservation information sheet printed in the tentative reservation printing processing, contacts the customer by phone to confirm the reservation, executes after-mentioned final reservation registration processing and registers the final reservation or inputs cancellation of the reservation.

Next, the final reservation registration processing executed in the reservation management device 10 will be described with reference to FIG. 8.

The final reservation registration processing is processing of displaying the reservation information of tentative reservation and final reservation, registering the final reservation and cancelling the reservation.

In the reservation management device 10, when execution instruction of the final reservation registration processing is input by the staff A1 via the operation unit 12, for example, the CPU 11 is triggered to execute the final reservation registration processing in cooperation with the final reservation registration program 153 which is read out from the ROM 15 and expanded in the RAM 13 appropriately.

First, the CPU 11 refers to the reservation database 80 stored in the storage unit 17, displays a reservation confirmation screen including the reservation information of each of the reservations on the display unit 14 and accepts the input information inputted by the staff A1 via the operation unit 12 (step S41).

The input information in step S41 is any one of operation information such as changes in reservation information displayed on the reservation confirmation screen and the like, final reservation input information which is start of final reservation and selection input of the reservation subject for the final reservation, reservation cancellation input information which is start of reservation cancellation and selection input of the reservation to be cancelled, and ending input information of the final reservation registration processing.

In the reservation information wherein the tentative reservation is registered, seats are not decided. The reservation confirmation screen displayed in step S41 is a time-series schedule display of the reservation information registered as tentative reservations and the reservation information registered as final reservations, for example.

In the reservation confirmation screen, the reservation information registered as final reservations may be displayed for each seat separately from the reservation information registered as tentative reservations or may be displayed in a time-series schedule for each seat.

Then, the CPU 11 determines whether the input information in step S41 is final reservation input information (step S42).

If the input information is final reservation input information (step S42; YES), the CPU 11 displays a final reservation screen for inputting the reservation information of the reservation which is selected in the final reservation input information on the display unit 14, and accepts the input information inputted by the staff A1 via the operation unit 12 (step S43).

The input information in step S43 is, for example, change input information which are changes in the planned date and time 82 through the message to store 89 in the record of the selected reservation in the reservation database 80 according to reservation confirmation made by the phone call from the staff A1 to the customer. For example, the change input information is information on changing of the seat from the desired seat in the tentative reservation indicated in the seat 83 to the seat number of the seat whose reservation is fixed by the staff A1.

Also, in a case where the reservation information of a tentative reservation is obtained by image recognition, the input information in step S43 includes correction input information of character information whose reservation information is wrongly recognized.

In a case where the reservation information of a tentative reservation is printed as an image, the input information in step S43 also includes character input information of items which are blank in the reservation information.

Then, the CPU 11 stores the input information in step S43 in the corresponding items in the record of the selected reservation in the reservation database 80, sets the reservation flag 91 of the record to 1 to perform final reservation registration (step S44), and shifts to step S41.

If the input information is not final reservation input information (step S42; NO), the CPU 11 determines whether the input information in step S41 is reservation cancellation input information (step S45). If the input information is reservation cancellation input information (step S45; YES), the CPU 11 sets the reservation flag 91 of the record in the reservation database 80 for the reservation selected in the reservation cancellation input information to 2 to cancel the reservation (step S46), and shifts to step S41.

If the input information is not reservation cancellation input information (step S45; NO), the CPU 11 determines whether the input information in step S41 is the ending instruction input information of the final reservation processing (step S47).

If the input information is the ending instruction input information of the final reservation processing (step S47; YES), the CPU 11 ends the final reservation registration processing.

If the input information is not the ending instruction input information of final reservation processing (step S47; NO), the input information in step S41 is operation information of the reservation confirmation screen, and the CPU 11 changes the reservation confirmation screen according to the input information in step S41 (step S48) and shifts to step S41.

As described above, according to the embodiment, in the reservation management device 10, an e-mail including reservation information regarding a reservation to dine at the store, where the reservation management device 10 is installed, in a form which is previously set corresponding to the source address, is received via the communication unit 16, the CPU 11 uses the reservation information 62 and the recognition procedure 63 in the setting information table 60 stored in the storage unit 17 to recognize the reservation information from the e-mail in the procedure corresponding to the source address 61 of the e-mail received by the communication unit 16 and stores the reservation information as a reservation database 80 in the storage unit 17.

Thus, it is possible to easily recognize and manage reservation information which is included in an e-mail in a form corresponding to the source address. Especially, it is effective in a case where there are a plurality of sources (reservation acceptance servers 20) and reservation information thereof is included in e-mails in different forms.

Further, the CPU 11 makes the printing unit 18 print the recognized reservation information.

Thus, the staff A1 can easily confirm the printed reservation information of a tentative reservation visually and call the customer to confirm the final reservation while checking the printed reservation information.

The setting information table 60 includes recognition procedures 63 corresponding to the reservation information 62 which is message text according to the source address 61.

In a case where the source address of the received e-mail corresponds to the recognition procedure 63 of the reservation information 62 which is message text, the CPU 11 recognizes the reservation information at the predetermined location in the message of the e-mail according to the Procedure 1 or 2 of the recognition procedure 63.

Thus, the reservation information can be easily recognized from the message text of the e-mail.

Further, the setting information table 60 includes the recognition procedures 63 corresponding to the reservation information 62 which is attached image according to the source address 61.

In a case where the source address of the received e-mail corresponds to the recognition procedure 63 which is the procedure with image recognition of the reservation information 62 which is attached image, the CPU 11 performs image recognition of the image data attached to the e-mail to recognize the reservation information as character information according to the the procedure with image recognition of the recognition procedure 63.

Thus, reservation information can be easily recognized from the image data attached to the e-mail.

Also, the setting information table 60 includes the forwarding address 64 of the reservation information corresponding to the source address 61.

The CPU 11 sends the recognized reservation information to the forwarding address via the communication unit 16 in a case where the source address of the e-mail received by the communication unit 16 corresponds to the forwarding address 64.

Thus, a store manager can visually confirm the reservation information easily by displaying the reservation information on the store manager terminal 50 to which the recognized reservation information is forwarded.

Though the above description discloses an example which uses a ROM 15 as a computer readable medium for the program according to the present invention, the present invention is not limited to the example.

A non-volatile memory such as a flash memory and a portable recording medium such as a CD-ROM can be applied as other computer readable medium.

A carrier wave can also be applied in the present invention as a medium which provides program data according to the present invention via a communication line.

The description in the above embodiment is an example of a reservation management device and a program thereof according to the present invention and the present invention is not limited to this.

Though the above embodiment has a configuration wherein the reservation management device 10 receives the reservation information through e-mails, the reservation information being reservations for dining at eating places, as a service of the eating places, the present invention is not limited to this. The reservation may be an appointment for a doctor at a hospital or a doctor's office and a reservation of renting service of a studio or a facility, for example.

It goes without saying that various changes can be made within the scope of the present invention with respect to the detailed configuration and detailed operation of the components of the reservation management system 1 in the embodiment.

## Claims

1. A reservation management device, comprising:
a communication unit (16) which receives an e-mail including reservation information (62) regarding a service reservation in a form which is previously determined depending on a source address (61);
**characterized by**
a first storage unit (17) which stores a plurality of different sets of recognition procedure information (63) so as to be associated with source addresses (61) respectively, each set of the recognition procedure information (63) indicating a part of the e-mail from which character information representing the reservation information (62) is recognized and how to recognize the character information, the part of the e-mail being either a part of the message text or an attached image; and
a control unit (11) which is adapted to recognize the character information representing the reservation information (62) from an e-mail in a plurality of procedures corresponding to a source address (61) of the e-mail received by the communication unit (16) by using the set of the recognition procedure information (63) associated with the source address (61) among the plurality of different sets of the recognition procedure information (63) stored in the first storage unit (17), the plurality of procedures including a procedure of extracting the character information from a prescribed portion of the message text and a procedure of performing Optical Character Recognition on an image attached to the email, the control unit (11) further being adapted to determine a procedure corresponding to the source address (61) of the received e-mail for being used for recognizing the character information representing the reservation information (62) from the e-mail and to store the recognized character information representing the reservation information (62) as a new record in a second storage unit (17).

2. The reservation management device according to claim 1, wherein the control unit (17) makes a printing unit (18) print the recognized reservation information (62).

3. The reservation management device according to claim 1 or 2, wherein
the recognition procedure information (63) includes identification information of a procedure for recognizing the reservation information (62) in a message text of an e-mail corresponding to a predetermined source address (61), and
when the source address (61) of the e-mail received by the communication unit (16) corresponds to the recognition procedure information (63) for recognizing the reservation information (62) in the message text, the control unit (11) recognizes the reservation information from a text at a predetermined position in the message of the e-mail according to the recognition procedure information (63).

4. The reservation management device according to any one of claims 1 to 3, wherein
the recognition procedure information (63) includes identification information of a procedure for performing image recognition on the reservation information (62) from image data attached to an e-mail corresponding to the predetermined source address (61), and
when the source address (61) of the e-mail received by the communication unit (16) corresponds to the recognition procedure information (63) for the image recognition of the reservation information (62) in the image data, the control unit (11) performs the image recognition on the image data attached to the e-mail to recognize the reservation information (62) as the character information according to the recognition procedure information (63).

5. The reservation management device according to any one of claims 1 to 4, wherein
the first storage unit (17) stores a forwarding address (64) of the reservation information (62) corresponding to the source address (61), and
when the source address (61) of the e-mail received by the communication unit (16) corresponds to the forwarding address (64) stored in the first storage unit (17), the control unit (11) sends the recognized reservation information (62) to the forwarding address (64) via the communication unit (16).

6. A non-transitory computer readable medium which stores a program for making a computer (10) execute a procedure, the procedure comprising the step of
receiving (S11: YES) an e-mail including reservation information (62) regarding a service reservation in a form which is previously determined depending on a source address (61);
**characterized by** the steps of
storing a plurality of different sets of recognition procedure information (63) in a first storage unit (17) so as to be associated with source addresses (61) respectively, each set of the recognition procedure information (63) indicating a part of the e-mail from which character information representing the reservation information (62) is recognized and one of a plurality of procedures how to recognize the character information, the part of the e-mail being either a part of the message text or an attached image, the plurality of procedures including a procedure of extracting the character information from a prescribed portion of the message text and a procedure of performing Optical Character Recognition on an image attached to the email;
determining (S16, S17, S20), out of the plurality of procedures, a procedure corresponding to the source address (61) of the received e-mail, to be used for recognizing the character information representing the reservation information (62) from the e-mail; and
recognizing (S18; S19; S21; S22) the character information representing the reservation information (62) from the e-mail in the determined procedure by using the set of the recognition procedure information (63) associated with the source address (61) among the plurality of different sets of the recognition procedure information (63) stored in the first storage unit (17) and storing (S23) the recognized character information representing the reservation information (62) as a new record in a second storage unit (17).

## Patentansprüche

1. Reservierungsmanagementeinrichtung, umfassend:
eine Kommunikationseinheit (16), die eine E-Mail mit Reservierungsinformation (62) bezüglich einer Reservierung eines Services in einer Form empfängt, die vorab abhängig von einer Quelladresse (61) bestimmt wird;
**gekennzeichnet durch**
eine erste Speichereinheit (17), die eine Mehrzahl von verschiedenen Sätzen von Erkennungsprozedurinformation (63) so speichert, dass sie jeweils mit Quelladressen (61) assoziiert sind, wobei jeder Satz der Erkennungsprozedurinformation (63) einen Teil der E-Mail angibt, aus dem Zeicheninformation, die die Reservierungsinformation (62) darstellt, erkannt wird und wie die Zeicheninformation zu erkennen ist, wobei der Teil der E-Mail entweder ein Teil des Nachrichtentextes oder ein angehängtes Bild ist; und
eine Steuereinheit (11), die angepasst ist, die Zeicheninformation, die die Reservierungsinformation (62) darstellt, aus einer E-Mail in einer Mehrzahl von Prozeduren, entsprechend einer Quelladresse (61) der von der Kommunikationseinheit (16) empfangenen E-Mail zu erkennen, unter Verwendung des Satzes der Erkennungsprozedurinformation (63), der mit der Quelladresse (61) assoziiert ist, unter der Mehrzahl von verschiedenen in der ersten Speichereinheit (17) gespeicherten Sätzen der Erkennungsprozedurinformation (63) wobei die Mehrzahl von Prozeduren eine Prozedur des Extrahierens der Zeicheninformation aus einem vorgeschriebenen Teil des Nachrichtentextes und eine Prozedur des Ausführens optischer Zeichenerkennung auf einem der E-Mail angehängten Bild enthält, die Steuereinheit (11) weiterhin angepasst ist, eine der Quelladresse (61) der empfangenen E-Mail entsprechende Prozedur zu bestimmen, um diese zu benutzen, um die die Reservierungsinformation (62) darstellende Zeicheninformation aus der E-Mail zu erkennen und die erkannte Zeicheninformation, die die Reservierungsinformation (62) darstellt, als einen neuen Eintrag in einer zweiten Speichereinheit (17) zu speichern.

2. Reservierungsmanagementeinrichtung nach Anspruch 1, wobei die Steuereinheit (17) eine Druckeinheit (18) veranlasst, die erkannte Reservierungsinformation (62) zu drucken.

3. Reservierungsmanagementeinrichtung nach Anspruch 1 oder 2, wobei
die Erkennungsprozedurinformation (63) Identifizierungsinformation einer Prozedur zum Erkennen der Reservierungsinformation (62) in einem Nachrichtentext einer E-Mail, die einer vorbestimmten Quelladresse (61) entspricht, enthält, und
die Steuereinheit (11) die Reservierungsinformation (62) aus einem Text an einer vorbestimmten Position in der Nachricht der E-Mail gemäß der Erkennungsprozedurinformation (63) erkennt, wenn die Quelladresse (61) der von der Kommunikationseinheit (16) empfangenen E-Mail der Erkennungsprozedurinformation (63) zum Erkennen der Reservierungsinformation in dem Nachrichtentext entspricht.

4. Reservierungsmanagementeinrichtung nach einem der Ansprüche 1 bis 3, wobei
die Erkennungsprozedurinformation (63) Identifizierungsinformation einer Prozedur zum Ausführen von Bilderkennung auf der Reservierungsinformation (62) aus einer der vorbestimmten Quelladresse (61) entsprechenden E-Mail angehängten Bilddaten enthält, und
die Steuereinheit (11) die Bilderkennung auf den der E-Mail angehängten Bilddaten ausführt, um die Reservierungsinformation (62) als die Zeicheninformation gemäß der Erkennungsprozedurinformation (63) zu erkennen, wenn die Quelladresse (61) der von der Kommunikationseinheit (16) empfangenen E-Mail der Erkennungsprozedurinformation (63) für die Bilderkennung der Reservierungsinformation (62) in den Bilddaten entspricht.

5. Reservierungsmanagementeinrichtung nach einem der Ansprüche 1 bis 4, wobei
die erste Speichereinheit (17) eine Weiterleitungsadresse (64) der Reservierungsinformation (62) entsprechend der Quelladresse (61) speichert, und
die Steuereinheit (11) die erkannte Reservierungsinformation (62) über die Kommunikationseinheit (16) an die Weiterleitungsadresse (64) sendet, wenn die Quelladresse (61) der von der Kommunikationseinheit (16) empfangenen E-Mail der in der ersten Speichereinheit (17) gespeicherten Weiterleitungsadresse (64) entspricht.

6. Nichtflüchtiges computerlesbares Medium, welches ein Programm speichert, das einen Computer (10) veranlasst, eine Prozedur auszuführen, wobei die Prozedur den Schritt umfasst:
Empfangen (S11: YES) einer E-Mail mit Reservierungsinformation (62) bezüglich einer Reservierung eines Services in einer Form, die vorab abhängig von einer Quelladresse (61), bestimmt wird;
**gekennzeichnet durch** die Schritte
Speichern einer Mehrzahl von verschiedenen Sätzen von Erkennungsprozedurinformation (63) in einer ersten Speichereinheit (17), so dass sie jeweils mit Quelladressen (61) assoziiert sind, wobei jeder Satz der Erkennungsprozedurinformation (63) einen Teil der E-Mail angibt, aus dem Zeicheninformation, die die Reservierungsinformation (62) darstellt, erkannt wird und eine einer Mehrzahl von Prozeduren, wie die Zeicheninformation zu erkennen ist, wobei der Teil der E-Mail entweder ein Teil des Nachrichtentextes oder ein angehängtes Bild ist, wobei die Mehrzahl von Prozeduren eine Prozedur des Extrahierens der Zeicheninformation aus einem vorgeschriebenen Teil des Nachrichtentextes und eine Prozedur des Ausführens optischer Zeichenerkennung auf einem der E-Mail angehängten Bild enthält;
Bestimmen (S16, S17, S20), aus der Mehrzahl von Prozeduren, einer der Quelladresse (61) der empfangenen E-Mail entsprechenden Prozedur, die zu benutzen ist, um die die Reservierungsinformation (62) darstellende Zeicheninformation aus der E-Mail zu erkennen; und
Erkennen (S18; S19; S21; S22) der die Reservierungsinformation (62) darstellenden Zeicheninformation aus der E-Mail in der bestimmten Prozedur unter Verwendung des Satzes der Erkennungsprozedurinformation (63), der mit der Quelladresse (61) assoziiert ist, unter der Mehrzahl von verschiedenen in der ersten Speichereinheit (17) gespeicherten Sätzen der Erkennungsprozedurinformation (63) und Speichern (S23) der erkannten Zeicheninformation, die die Reservierungsinformation (62) darstellt, als einen neuen Eintrag in einer zweiten Speichereinheit (17).

## Revendications

1. Dispositif de gestion d'une réservation, comportant :
une unité de communication (16) qui reçoit un courriel comprenant des informations de réservation (62) concernant une réservation d'un service sous une forme préalablement déterminée en fonction d'une adresse source (61) ;
**caractérisé par**
une première unité de stockage (17) qui stocke une pluralité de différents ensembles d'informations de procédure de reconnaissance (63) destinées à être associées à des adresses source (61) respectives, chaque ensemble d'informations de procédure de reconnaissance (63) indiquant une partie du courriel dont les informations de caractère représentant les informations de réservation (62) sont reconnues et comment reconnaître les informations de caractère, la partie du courriel étant soit une partie du texte du message ou une image jointe ; et
une unité de commande (11) apte à reconnaître les informations de caractère représentant les informations de réservation (62) à partir d'un courriel par une pluralité de procédures correspondant à une adresse source (61) du courriel reçu par l'unité de communication (16) en utilisant l'ensemble d'informations de procédure de reconnaissance (63) associé à l'adresse source (61) parmi la pluralité de différents ensembles d'informations de procédure de reconnaissance (63) stockées dans la première unité de stockage (17), la pluralité de procédures incluant une procédure consistant à extraire les informations de caractère d'une partie prescrite du texte du message et une procédure consistant à mettre en oeuvre une reconnaissance optique de caractère dans une image jointe au courriel, l'unité de commande (11) étant en outre apte à déterminer une procédure correspondant à l'adresse source (61) du courriel reçu, à utiliser pour reconnaître les informations de caractère représentant les informations de réservation (62) et pour stocker les informations de caractère reconnues représentant les informations de réservation (62) en tant que nouveau dossier dans une seconde unité de stockage (17).

2. Dispositif de gestion d'une réservation selon la revendication 1, où l'unité de commande (17) occasionne l'impression des informations de réservation reconnues (62) par une unité d'impression (18).

3. Dispositif de gestion d'une réservation selon la revendication 1 ou 2, où
les informations de procédure de reconnaissance (63) comprennent des informations d'identification d'une procédure pour reconnaître les informations de réservation (62) dans un texte de message d'un courriel correspondant à une adresse source prédéterminée (61) et
lorsque l'adresse source (61) du courriel reçu par l'unité de communication (16) correspond aux informations de procédure de reconnaissance (63) pour reconnaître les informations de réservation (62) dans le texte du message, l'unité de commande (11) reconnaît les informations de réservation dans un texte en une position prédéterminée dans le message du courriel, conformément aux informations de procédure de reconnaissance (63).

4. Dispositif de gestion d'une réservation selon l'une quelconque des revendications 1 à 3, où
les informations de procédure de reconnaissance (63) comprennent des informations d'identification d'une procédure pour appliquer une reconnaissance d'image aux informations de réservation (62) provenant de données d'image jointes à un courriel correspondant à l'adresse source (61) prédéterminée, et
lorsque l'adresse source (61) du courriel reçu par l'unité de communication (16) correspond aux informations de procédure de reconnaissance (63) pour la reconnaissance des informations de réservation (63) dans les données d'image, l'unité de commande (11) applique la reconnaissance d'image aux données d'image jointes au courriel afin de reconnaître les informations de réservation (62) sous forme d'information de caractère, conformément aux informations de procédure de reconnaissance.

5. Dispositif de gestion d'une réservation selon l'une quelconque des revendications 1 à 4, où
la première unité de stockage (17) stocke une adresse de transfert (64) des informations de réservation (62) correspondant à l'adresse source (61), et
lorsque l'adresse source (61) du courriel reçu par l'unité de communication (16) correspond à l'adresse de transfert (64) stockée dans la première unité de stockage (17), l'unité de commande (11) envoie les informations de procédure de reconnaissance (62) à l'adresse de transfert (64) via l'unité de communication (16).

6. Support non transitoire lisible par ordinateur qui stocke un programme occasionnant l'exécution par un ordinateur (10) d'une procédure, la procédure comportant l'étape consistant à :
recevoir (S11 : YES) un courriel incluant des informations de réservation (62) concernant une réservation d'un service sous une forme préalablement déterminée en fonction d'une adresse source (61) ;
**caractérisé par** les étapes consistant à :
stocker, dans une première unité de stockage (17), une pluralité de différents ensembles d'informations de procédure de reconnaissance (63) destinées à être associées à des adresses source (61) respectives, chaque ensemble d'informations de procédure de reconnaissance (63) indiquant une partie du courriel dont les informations de caractère représentant les informations de réservation (62) sont reconnues ainsi qu'une procédure parmi une pluralité de procédures indiquant comment reconnaître les informations de caractère, la partie du courriel étant soit une partie du texte du message ou une image jointe, la pluralité de procédures incluant une procédure consistant à extraire les informations de caractère d'une partie prescrite du texte du message et une procédure consistant à mettre en oeuvre une reconnaissance optique de caractère dans une image jointe au courriel ;
déterminer (S16, S 17, S20), parmi une pluralité de procédures, une procédure correspondant à l'adresse source (61) du courriel reçu, à utiliser pour reconnaître les informations de caractère représentant les informations de réservation (62) dans le courriel ; et
reconnaître (S18 ; S19 ; S21 ; S22) les informations de caractère représentant les informations de réservation (62) dans le courriel par la procédure déterminée en utilisant l'ensemble d'informations de procédure de reconnaissance (63) associé à l'adresse source (61) parmi la pluralité de différents ensembles d'informations de procédure de reconnaissance (63) stockés dans la première unité de stockage (17) et stocker (S23) les informations de caractère reconnues représentant les informations de réservation (62) en tant que nouveau dossier dans une seconde unité de stockage (17).
